# EUROPEAN PATENT APPLICATION

(11) **EP 4 826 566 A1**
(43) Date of publication of application: **21.10.2026**
(21) Application number: 26707786.5
(22) Date of filing: 12.02.2026
(51) Int. Cl.: G06F 16/732, G06F 16/738, G06F 16/71, G06F 16/783, G06F 16/901, G06F 16/3329, G06F 16/338, G06F 16/36, G06F 40/30, G06V 20/70

(54) **ELECTRONIC DEVICE FOR PROVIDING QUERY/RESPONSE SERVICE USING PERSONA AND CONTROL METHOD THEREFOR**

(30) Priority: 28.02.2025 KR 20250027075
(71) Applicant: Samsung Electronics Co., Ltd, Suwon-si, Gyeonggi-do 16677 (KR)
(72) Inventor: SEO, Minkyo, Suwon-si, Gyeonggi-do 16677 (KR); CHO, Suho, Suwon-si, Gyeonggi-do 16677 (KR); JANG, Jeongrok, Suwon-si, Gyeonggi-do 16677 (KR); PARK, Jinsol, Suwon-si, Gyeonggi-do 16677 (KR)
(74) Representative: Gulde & Partner
(86) International application number: PCT/KR2026/002675
(87) International publication number: WO 2026/182465

(57) **Abstract**

Disclosed is an electronic apparatus. The apparatus includes: a memory storing instructions; and at least one processor including processing circuitry, wherein, if executed individually or collectively by the at least one processor, the instructions cause the electronic apparatus to: obtain a persona corresponding to a query among a plurality of personas corresponding to content based on a database if user input corresponding to the query related to the content is received; and provide a response corresponding to the query based on the obtained persona, the plurality of personas being based on a knowledge graph corresponding to the content and the database.

## Description

### [Technical Field]

The present disclosure relates to an electronic apparatus for providing a query and answer service and a control method thereof.

### [Background Art]

With the expansion of an over the top (OTT) service, users have become able to view video contents such as movies or dramas in desired spaces without going to a movie theater. In addition, due to the development of generative artificial intelligence such as a large language model (LLM), a user has become able to obtain desired query-and-response results by using natural language without using computer languages through coding or the like.

To obtain answers to questions arising while viewing contents, users are required to use a program employing a generative artificial intelligence model separately from the OTT service or perform a web search. Accordingly, for the convenience of a user, a need has arisen for a method capable of coupling the OTT service to the generative artificial intelligence model to perform query-and-response about contents provided in the OTT service.

### [Disclosure of Invention]

### [Solution to Problem]

According to an embodiment of the present disclosure, provided is an electronic apparatus including: a memory storing instructions; and at least one processor including processing circuitry. The instructions, when executed individually or collectively by the at least one processor, cause the electronic apparatus to: obtain a persona corresponding to a query among a plurality of personas corresponding to content based on a database if user input corresponding to the query related to the content is received; and provide a response corresponding to the query based on the obtained persona, the plurality of personas being based on a knowledge graph corresponding to the content and the database.

The instructions, when executed individually or collectively by the at least one processor, may cause the electronic apparatus to obtain, by using an artificial intelligence model, the plurality of personas corresponding to the content based on the knowledge graph corresponding to the content, the database, and a first prompt.

The first prompt may include a prompt corresponding to a request for predicting an attribute of a user corresponding to the content for a plurality of queries in the database based on the knowledge graph corresponding to the content.

The instructions, when executed individually or collectively by the at least one processor, may cause the electronic apparatus to: obtain evaluation information corresponding to an expected query corresponding to the persona, an expected response to the expected query, and feedback on the expected response for each of the plurality of personas; and update, by using an updated artificial intelligence model, the plurality of personas based on the evaluation information.

The instructions, when executed individually or collectively by the at least one processor, may cause the electronic apparatus to: obtain, by using the artificial intelligence model, the expected query based on the persona,the knowledge graph corresponding to the content, and a second prompt; obtain, by using the artificial intelligence model, the expected response based on the persona, the knowledge graph corresponding to the content, the expected query, and a third prompt; and obtain, by using a second artificial intelligence model, the feedback based on the persona, the knowledge graph corresponding to the content, the expected query, the expected response, and a fourth prompt. The second prompt may include a prompt corresponding to a request for the expected query by the user corresponding to the persona based on the knowledge graph corresponding to the content, the third prompt may include a prompt corresponding to a request for the expected response to the expected query by the user corresponding to the persona based on the knowledge graph corresponding to the content, and the fourth prompt may include a prompt corresponding to a request for the feedback on the expected response by the user corresponding to the persona based on the knowledge graph corresponding to the content.

The instructions, when executed individually or collectively by the at least one processor, may cause the electronic apparatus to: obtain, by using an evaluation model, a first score based on a prompt corresponding to a request for a score related to quality of the expected query and the expected response; and update the artificial intelligence model based on the first score.

The instructions, when executed individually or collectively by the at least one processor, cause the electronic apparatus to: obtain, by using an evaluation model, a second score based on a set including the expected query, the expected response, and the feedback, and a prompt corresponding to a request for a score related to quality of the set; and update the artificial intelligence model based on the second score.

The knowledge graph corresponding to the content may include at least one node, at least one edge, or a text description of a frame for each of the plurality of frames included in the content, the node may correspond to an object included in the frame, and the edge may correspond to a relationship between the objects included in the frame.

The instructions, when executed individually or collectively by the at least one processor, may cause the electronic apparatus to: obtain a usage rate of at least one of the node or the edge corresponding to obtaining the response to the query; and update the knowledge graph based on the obtained usage rate.

The instructions, when executed individually or collectively by the at least one processor, may cause the electronic apparatus to: obtain an average value of similarities for each of the plurality of personas based on a similarity between the query and a plurality of queries corresponding to the plurality of personas stored in the database; and identify, as the persona corresponding to the query, a persona having a greatest value among the obtained average values.

The instructions, when executed individually or collectively by the at least one processor, may cause the electronic apparatus to: identify a similarity between the query and a plurality of queries in the database; obtain, from the database, the response corresponding to the query equal to or greater than a threshold value and provide the response if the query whose similarity is equal to or greater than the threshold value exists among the plurality of queries; and obtain the response corresponding to the query based on the obtained persona if no query whose similarity is equal to or greater than the threshold value exists among the plurality of queries.

According to an embodiment of the present disclosure, provided is a control method of an electronic apparatus, the method including: obtaining a persona corresponding to a query among a plurality of personas corresponding to content based on a database if user input corresponding to the query related to the content is received; and providing a response corresponding to the query based on the obtained persona.

The plurality of personas may be based on a knowledge graph corresponding to the content and the database.

According to an embodiment of the present disclosure, provided is a non-transitory computer-readable recording medium storing at least one instruction that, if executed by a processor of an electronic apparatus, causes the electronic apparatus to perform an operation, wherein the operation includes: obtaining a persona corresponding to a query among a plurality of personas corresponding to content based on a database if user input corresponding to the query related to the content is received; and providing a response corresponding to the query based on the obtained persona.

### [Brief Description of Drawings]

FIG. 1 is a diagram illustrating an operation of an electronic apparatus according to at least one embodiment of the present disclosure.
FIG. 2 is a block diagram illustrating a configuration of the electronic apparatus according to at least one embodiment of the present disclosure.
FIG. 3 is a block diagram illustrating a detailed configuration of the electronic apparatus according to at least one embodiment of the present disclosure.
FIG. 4 is a flowchart illustrating a method for generating a persona according to at least one embodiment of the present disclosure.
FIG. 5 is a diagram illustrating a knowledge graph according to at least one embodiment of the present disclosure.
FIGS. 6A to 6D are diagrams illustrating a process in which the electronic apparatus generates a persona and updates the persona according to at least one embodiment of the present disclosure.
FIG. 7 is a flowchart illustrating a method in which the electronic apparatus provides a response to a user according to at least one embodiment of the present disclosure.
FIGS. 8A, 8B, 9A, and 9B are diagrams illustrating a user interface of a query-and-answer program according to at least one embodiment of the present disclosure.
FIG. 10 is a flowchart illustrating a method for identifying a persona according to at least one embodiment of the present disclosure.
FIG. 11 is a diagram illustrating a method for identifying a persona based on a database according to at least one embodiment of the present disclosure.
FIGS. 12 and 13 are flowcharts illustrating a method for optimizing the knowledge graph according to at least one embodiment of the present disclosure.

### [Mode for Invention]

It should be understood that the various embodiments of the present disclosure and terms used herein are not intended to limit technical features described in the present disclosure to specific embodiments, and rather are intended to include various modifications, equivalents, and substitutions of the corresponding embodiments.

Throughout the accompanying drawings, similar components are denoted by similar reference numerals.

A singular noun corresponding to an item is intended to include one or more of the items unless a relevant context clearly indicates otherwise.

In the present disclosure, an expression such as "A or B", "at least one of A and B", "at least one of A or B", "A, B, or C", "at least one of A, B, and C", "at least one of A, B, or C", or the like may include any one of the items listed together or all possible combinations thereof. For example, "A or B", "at least one of A and B", or "at least one of A or B" may indicate all of 1) a case in which at least one A is included, 2) a case in which at least one B is included, or 3) a case in which both of at least one A and at least one B are included.

Terms such as "first", "second", and the like may be used simply to distinguish one element and another element from each other, and do not limit the corresponding components in any other respect (e.g., importance or order).

If a component (e.g., a first component) is mentioned to be "coupled with/to" or "connected to" another component (e.g., a second component) with or without terms "operatively" or "communicatively", it should be understood that the component may be directly coupled to another component (e.g., in a wired manner), in a wireless manner, or through a third component).

It should be further understood that terms "include", "have" or the like, used in the specification specify the presence of features, numerals, steps, operations, components, parts mentioned in the specification or combinations thereof, and do not preclude the presence or addition of one or more other features, numerals, steps, operations, components, parts, or combinations thereof.

If a component is referred to as being "connected", "coupled", "supported", or "in contact" with another component, it includes not only a case where the components are directly connected, coupled, supported, or in contact with each other, but also a case where the components are indirectly connected, coupled, supported, or in contact with each other through a third component.

If a component is referred to be disposed "on" another component, it includes not only a case where the component is in contact with another component, but also a case where still another component is interposed between the two components.

A term "and/or" includes a combination of a plurality of related component or any one of the plurality of related components.

In some contexts, an expression "a device configured to ~" may indicate that the device may "perform~" together with another device or component. For example, a "processor configured (or set) to perform A, B, and C" may indicate a dedicated processor (e.g., an embedded processor) that may perform the corresponding operations or a generic-purpose processor (e.g., a central processing unit (CPU) or an application processor) that may perform the corresponding operations by executing one or more software programs stored in a memory device.

In the embodiments, a "module" or a "part" may perform at least one function or operation, and be implemented by hardware or software or be implemented by a combination of hardware and software. In addition, a plurality of "modules" or a plurality of "parts" may be integrated in at least one module and be implemented by at least one processor (not shown) except for a "module" or a "part" that needs to be implemented by specific hardware.

Meanwhile, various elements and regions in the drawings are schematically illustrated. Therefore, the spirit of the present disclosure is not limited by relative sizes or intervals illustrated in the accompanying drawings.

Hereinafter, an embodiment of the present disclosure is described in more detail with reference to the accompanying drawings.

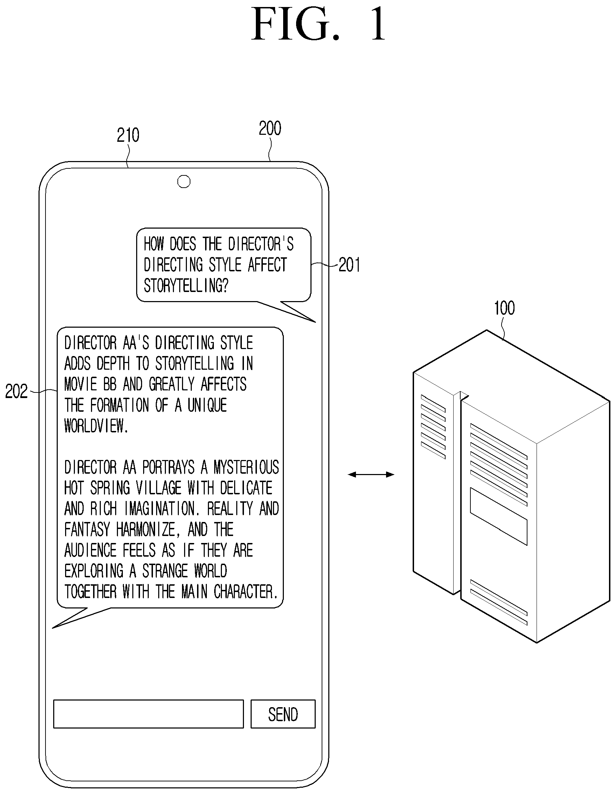

FIG. 1 is a diagram illustrating an operation of an electronic apparatus according to at least one embodiment of the present disclosure.

Referring to FIG. 1, an electronic apparatus 100 may generate a response corresponding to a query. The electronic apparatus 100 may, for example, include a server device. The server device may include a device providing a service to a plurality of users through a network. The query may include a query related to content. The content may include video content such as movies, dramas, or short forms. For example, the user may view content being played on a user terminal device 200, and may input a query related to the content into the user terminal device 200. The user terminal device 200 may transmit the query input by the user to the electronic apparatus 100.

For example, the electronic apparatus 100 may receive a query 201 such as "How does the director's directing style affect storytelling?" from the user. The electronic apparatus 100 may analyze the content being played based on the received query 201. Based on the analysis of the content, the electronic apparatus 100 may transmit a control signal to enable the user terminal device 200 to display a response 202 corresponding to the query on a display 210.

Upon generating a response corresponding to a query, the electronic apparatus 100 may predict an attribute of the user who creates the query related to the content, and may generate a response corresponding to the query based on the user attribute.

For example, based on a query received from the user, the electronic apparatus 100 may identify that the user has an attribute of being "a fan of director AA." The electronic apparatus 100 may generate a response predicted to be desired by the user who is "the fan of director AA" for the received query, and may provide the response to the user.

By an operation of the electronic apparatus 100 described above, the electronic apparatus 100 may couple an over the top (OTT) service to a generative artificial intelligence model to perform query-and-response corresponding to content provided in the OTT service, thereby improving a convenience of the user.

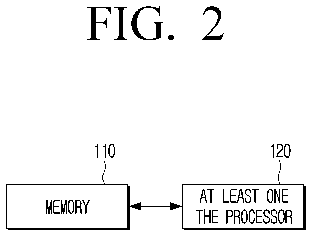

FIG. 2 is a block diagram illustrating a configuration of the electronic apparatus according to at least one embodiment of the present disclosure.

Referring to FIG. 2, the electronic apparatus 100 may include a memory 110 and at least one the processor 120 (hereinafter referred to as the processor 120).

The memory 110 may store data necessary for the electronic apparatus 100 to operate according to various embodiments of the present disclosure. The memory 110 may be implemented as a memory embedded in the electronic apparatus 100 based on a data storage purpose (e.g., a volatile memory (e.g., a semi-permanent memory such as a random access memory (RAM)) or a non-volatile memory (e.g., a permanent memory such as a read only memory (ROM), a flash memory, a hard drive, or a solid state drive), or may be implemented as a memory detachable from the electronic apparatus 100 (e.g., a memory card or an external memory).

The memory 110 may store instructions. The processor 120 may perform the operation of the electronic apparatus 100 according to the various embodiments of the present disclosure by executing the instructions stored in the memory 110 individually or collectively. In addition, the memory 110 may store programs and data for driving the electronic apparatus 100. For example, the memory 110 may store at least one software application such as an operating system (or system) software application, a firmware software application, a driver software application, a plugin (e.g., add-in, add-on, and/or applet) software application, and/or any other suitable software application.

Meanwhile, in the present disclosure, the term "memory 110" may be used to refer to the memory 110, a ROM or a RAM included in the processor 120, or a memory card (e.g., a micro secure digital (SD) card or a memory stick) mounted in the electronic apparatus 100. In addition, the memory 110 may store various information necessary for achieving the purpose of the present disclosure, and information stored in the memory 110 may be updated as the information is received from an external device or input by the user.

The processor 120 may control overall operations of the electronic apparatus 100. For example, the processor 120 may cause other components of the electronic apparatus 100 to perform various operations by executing the instructions stored in the memory 110. For example, the processor 120 may be operatively connected to the memory 110 to control the operation of the electronic apparatus 100. In addition, the processor 120 may execute at least one instruction stored in the memory 110 to control the operation of the electronic apparatus 100 according to the present disclosure. The processor 120 may include one or a plurality of processors.

The processor 120 may be implemented as at least one integrated circuit (IC) chip, and may execute various data processing. The processor 120 may include at least one electrical circuit, and may distribute and process the instructions (or programs, data, or the like) stored in the memory 110 individually or collectively. The processor 120 may include a processor assembly including at least one processing circuitry. The processor 120 may include any operative processing circuitry to control the performance and operations of at least one component (e.g., the memory 110) included in the electronic apparatus 100. For example, the processor 120 (e.g., an application processor (AP)) may be implemented as a system-on-chip (SoC) (e.g., a single chip or a chipset). For example, the processor 120 may be implemented as multiple cores (or at least one core circuit), multiple chips, or multiple chipsets. For example, the processor 120 may include at least one processing circuitry. For example, the processor 120 may include at least one processing circuitry for performing various functions of the present disclosure individually and/or collectively.

The processor 120 may include at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The processor 120 may control one or any combination of other components included in the electronic apparatus 100, and may perform an operation related to communication or data processing. The processor 120 may execute at least one program or instruction stored in the memory 110 of the electronic apparatus 100. For example, the processor 120 may execute at least one instruction stored in the memory 110 to perform a method according to an embodiment of the present disclosure.

If the method according to an embodiment of the present disclosure includes a plurality of operations, the plurality of operations may be performed by one processor or may be performed by a plurality of processors. For example, if a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-specific processor).

The processor 120 may be implemented as a single-core processor including one core, or may be implemented as at least one multicore processor including multiple cores (e.g., homogeneous multiple cores or heterogeneous multiple cores). If the processor 120 is implemented as the multicore processor, each of the multiple cores included in the multicore processor may include a processor internal memory such as a cache memory or an on-chip memory, and a common cache shared by the multiple cores may be included in the multicore processor. In addition, each (or some) of the multiple cores included in the multicore processor may independently read and perform program instructions for implementing the method according to an embodiment of the present disclosure, or all (or some) of the multiple cores may be linked to read and perform the program instructions for implementing the method according to an embodiment of the present disclosure.

If the method according to an embodiment of the present disclosure includes a plurality of operations, the plurality of operations may be performed by one core among the multiple cores included in the multicore processor, or may be performed by the multiple cores. For example, if a first operation, a second operation, and a third operation are performed by the method according to an embodiment, all of the first operation, the second operation, and the third operation may be performed by a first core included in the multicore processor, or the first operation and the second operation may be performed by the first core included in the multicore processor, and the third operation may be performed by a second core included in the multicore processor.

In embodiments of the present disclosure, the processor may refer to a system-on-chip in which at least one processor and other electronic components are integrated, the single-core processor, the multicore processor, or a core included in the single-core processor or the multicore processor. Here, the core may be implemented as a CPU, a GPU, an APU, a MIC, a DSP, an NPU, a hardware accelerator, or a machine learning accelerator. However, the embodiments of the present disclosure are not limited thereto.

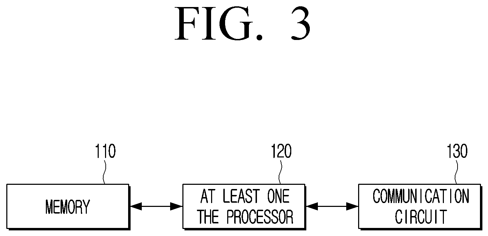

FIG. 3 is a block diagram illustrating a detailed configuration of the electronic apparatus according to at least one embodiment of the present disclosure.

Referring to FIG. 3, the electronic apparatus 100 may include the memory 110, the processor 120, and a communication circuit 130. However, such a configuration is merely exemplary, and in implementing the present disclosure, a new component may be added to or some components may be omitted from such a configuration. Meanwhile, a description of the component illustrated in FIG. 3 that overlaps the component illustrated in FIG. 2 is omitted.

The communication circuit 130 may perform data communication with an external electronic apparatus under the control of the processor 120. The external electronic apparatus may include a server, a home appliance, a mobile device (e.g., a smartphone, a tablet personal computer (PC), or a wearable device) or the like. For example, the communication circuit 130 may communicate with the external electronic apparatus through the network. For example, the processor 120 may receive data from the external electronic apparatus through the communication circuit 130, and may transmit data to the external electronic apparatus through the communication circuit 130.

The communication circuit 130 may include a hardware component for supporting the transmission and/or reception of electrical signals between the electronic apparatus 100 and the external electronic apparatus. For example, the communication circuit 130 may perform data communication between the electronic apparatus 100 and another electronic apparatus by using at least one data communication method including wired local area network (LAN), wireless LAN, wireless fidelity (Wi-Fi), Wi-Fi Direct, Bluetooth, ZigBee, Wi-Fi Direct (WFD), infrared communication (Infrared Data Association (IrDA)), Bluetooth Low Energy (BLE), near field communication (NFC), wireless broadband internet (WiBro), world interoperability for microwave access (WiMAX), shared wireless access protocol (SWAP), wireless gigabit alliances (WiGig), or radio frequency (RF) communication. The communication circuit 130 may also be referred to as a communication interface.

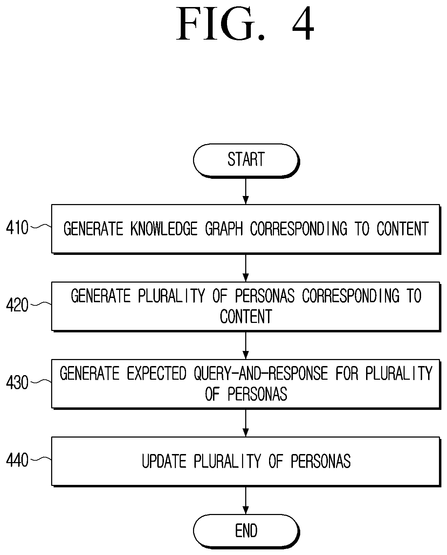

FIG. 4 is a flowchart illustrating an example of an operation in which the electronic apparatus generates a persona according to at least one embodiment of the present disclosure. The processor 120 may perform at least one of the operations illustrated in FIG. 4. If instructions stored in the memory 110 are individually or collectively executed by the processor 120, the electronic apparatus 100 may perform the operations illustrated in FIG. 4.

In operation 410, the electronic apparatus 100 may generate a knowledge graph corresponding to content. The content may include video content such as movies, dramas, or short forms.

The knowledge graph corresponding to content may be data in which objects included in the content and relationships (or interactions) between the objects are structured and expressed in a text form. The knowledge graph corresponding to content may be generated for each content frame.

In an embodiment, the electronic apparatus 100 may obtain the knowledge graph corresponding to content by using an artificial intelligence model. For example, the artificial intelligence model may include a first artificial intelligence model and a second artificial intelligence model. The electronic apparatus 100 may input content frames and audio for the frame into the first artificial intelligence model, and may obtain, from the first artificial intelligence model, data on objects in the frames and relationships between the objects. For example, the first artificial intelligence model may include a model trained to process data of different modalities and to identify the objects in frames and the relationships between the objects. For example, the first artificial intelligence model may be a computer vision model. The electronic apparatus 100 may input data (e.g., output data from the first artificial intelligence model) into the second artificial intelligence model, and may obtain the knowledge graph from the second artificial intelligence model. The second artificial intelligence model may be a large language model (LLM). The LLM is a type of generative model and may be trained based on a large amount of training data. For example, the LLM may perform various language tasks such as understanding the context, structure, meaning, or the like of a language, generating text, translating text, summarizing text, and providing a response corresponding to a query. However, the present disclosure is not limited thereto, and the electronic apparatus 100 may obtain the knowledge graph by using various methods.

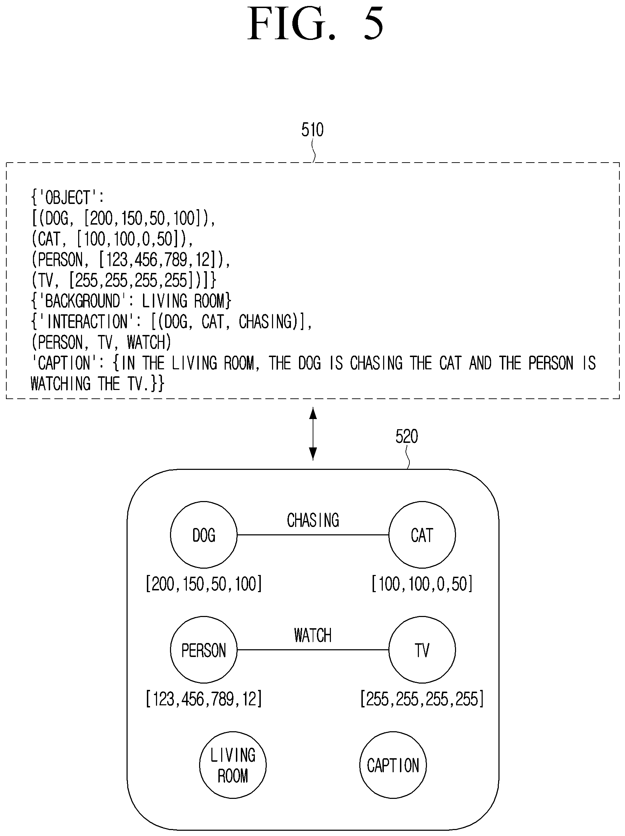

FIG. 5 illustrates an example of the knowledge graph according to at least one embodiment of the present disclosure.

For example, FIG. 5 illustrates an example of the knowledge graph for a frame in which a dog chases a cat in a living room and a person in the living room is watching a television (TV).

Referring to 510 illustrated in FIG. 5, the electronic apparatus 100 may input output data from the first artificial intelligence model into the second artificial intelligence model to obtain the knowledge graph 510 from the second artificial intelligence model. The knowledge graph 510 may include data in which information such as content included in each frame, atmosphere, an object, or an interaction between objects is expressed in a text form.

The knowledge graph 510 may include information on objects included in a frame. For example, the knowledge graph 510 may include text indicating that a dog, a cat, a person, and a TV are included in the frame (e.g., the objects: the dog, the cat, and the person). In the knowledge graph, an object may correspond to a node. The node may be a basic component of the knowledge graph and may indicate a specific object.

The knowledge graph 510 may include text indicating coordinates of the objects (e.g., the dog: 200, 150, 50, 100; the cat: 100, 100, 0, 50; the person: 123, 456, 789, 12; and the TV: 255, 255, 255, 255). As an example, coordinates of an object may be coordinates indicating a bounding box for the object.

The knowledge graph 510 may include text indicating an interaction between objects (e.g., interactions: {dog, cat, chases}). The interaction between objects may correspond to an edge. The edge may be a basic component of the knowledge graph and may indicate a relationship between nodes.

The knowledge graph 510 may include text indicating a background included in a frame (e.g., background: a living room).

Referring to 520 illustrated in FIG. 5, the knowledge graph 510 may be expressed in a schematic form. For example, a node may be expressed in a form in which text is included in a circle, and an edge may be expressed in a form of a line connecting the nodes.

In operation 420, the electronic apparatus 100 may generate a plurality of personas corresponding to the content based on the knowledge graph.

For example, the electronic apparatus 100 may input the knowledge graph, query-and-response, and a first prompt into the second artificial intelligence model, and may obtain the plurality of personas from the second artificial intelligence model. For example, the second artificial intelligence model may be the LLM. The electronic apparatus 100 may store the obtained personas in a question-and-answer database.

The question-and-answer database may be a database for storing query-and-answer made by users using a query-and-answer function. The question-and-answer database may store not only query-and-response corresponding to content corresponding to the knowledge graph but also query-and-answer corresponding to various content. For example, the query-and-answer may include a question such as "Please summarize the content of movie OO", and may include a response corresponding to the question such as "Movie OO is about a lonely main character who meets friends and becomes happy." The question-and-answer database may be expressed using a term such as a database.

In addition, in the present disclosure, a persona may include information on an attribute of a user expected to view content.

The first prompt may include a prompt for requesting the attributes of the user expected to view content based on the knowledge graph and a plurality of queries stored in the question-and-answer database.

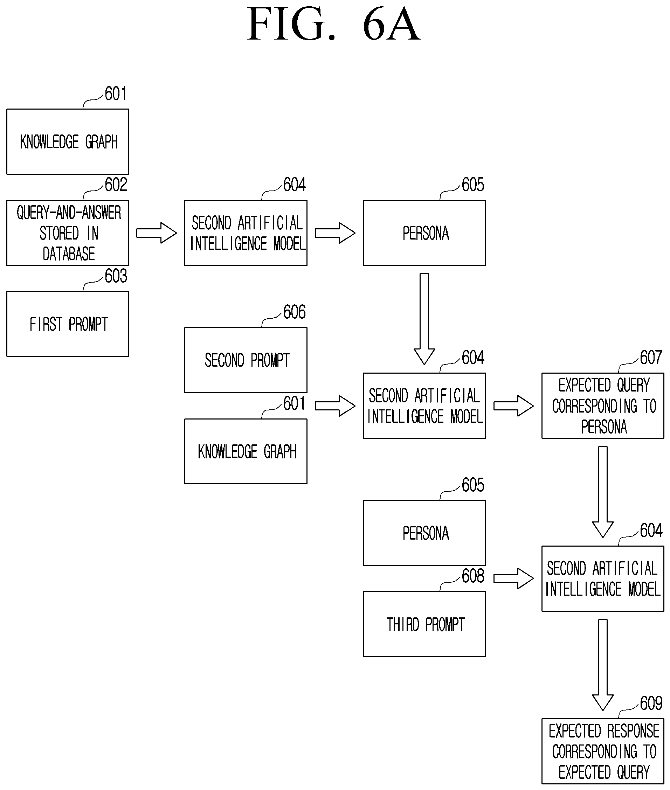

For example, referring to FIG. 6A, the electronic apparatus 100 may input a knowledge graph 601 corresponding to movie A, query-and-answer 602 stored in the question-and-answer database, and a first prompt 603 into a second artificial intelligence model 604. The electronic apparatus 100 may obtain, from the second artificial intelligence model 604, a plurality of personas 605 as a result value for the input data. For example, the first prompt 603 may include text such as "Predict a viewer attribute in each query based on the knowledge graph and the query-and-answer. The attribute will be used to improve the performance of a response model and to generate a mock query. The attribute should belong to a universal category to include various aspects of viewers." The plurality of personas 605 may include "50s, male, office worker, fan of actor B", "30s, female, fan of director C", and "30s, female, viewer having an emotional tendency."

In operation 430, the electronic apparatus 100 may generate expected query-and-response for the plurality of personas.

The expected query-and-response may include an expected query corresponding to each of the plurality of personas and an expected response to the expected query.

For example, the expected query may include content predicted to be queried about the content by a user corresponding to each persona. In addition, the expected response to the expected query may include content predicted to be responded to the expected query by the user corresponding to each persona.

For example, the electronic apparatus 100 may input the persona, the knowledge graph, and a second prompt into the second artificial intelligence model, and may obtain an expected query corresponding to the persona from the second artificial intelligence model. The second artificial intelligence model may be the LLM.

The second prompt may include a prompt for requesting generation of content predicted to be queried about the content by the user corresponding to each persona.

For example, referring to FIG. 6A, the electronic apparatus 100 may input the persona 605, the knowledge graph 601 corresponding to movie A, and a second prompt 606 into the second artificial intelligence model 604, and may obtain, from the second artificial intelligence model 604, an expected query 607 corresponding to the persona. For example, the second prompt 606 may include text such as "What questions would a viewer of a persona such as {predicted age group: 30s, predicted interest field: film directing, predicted knowledge level: high, loyalty to the content series: avid fan, another attribute: director-oriented} (e.g., the persona 605) be likely to ask?" The expected query 607 may include the text such as "How does the director's directing style affect storytelling?" The electronic apparatus 100 may obtain the expected query 607 for each of the plurality of personas by using the above-described method.

The electronic apparatus 100 may obtain an expected response 609 corresponding to the expected query.

For example, the electronic apparatus 100 may input the persona, the expected query corresponding to the persona, and a third prompt into the second artificial intelligence model, and may obtain the expected response from the second artificial intelligence model. The second artificial intelligence model may be the LLM.

The third prompt may include a prompt for requesting generation of content predicted to be responded to the expected query by the user corresponding to each persona.

For example, referring to FIG. 6A, the electronic apparatus 100 may input the persona 605, the expected query 607 corresponding to the persona, and a third prompt 608 into the second artificial intelligence model 604, and may obtain, from the second artificial intelligence model 604, the expected response 609 corresponding to the expected query. For example, the third prompt 608 may include the text such as "If a viewer of a persona such as {predicted age group: 30s, predicted interest field: film directing, predicted knowledge level: high, loyalty to the series: avid fan, another attribute: director-oriented} (e.g., the persona 605) asks the question such as 'How does the director's directing style affect storytelling?', what would be an appropriate response?" The expected response 609 corresponding to the expected query may include text such as "Director C added depth to the story through nonlinear storytelling and character-centered development." The electronic apparatus 100 may obtain expected responses 609 corresponding to the expected query 607 for each of the plurality of personas by using the above-described method.

The electronic apparatus 100 may predict feedback for the expected query and the expected response corresponding to each of the plurality of personas.

The feedback may include a score that quantifies a degree to which a response corresponding to a query is appropriate. For example, the feedback may indicate that, the higher the number, the more appropriate the expected response is to the expected query. For example, the feedback may be expressed on a scale from 1 to 5. In this case, 1 point may correspond to very inappropriate, 2 points to somewhat inappropriate, 3 points to average, 4 points to somewhat appropriate, and 5 points to very appropriate.

The electronic apparatus 100 may input the persona, the expected query corresponding to the persona, the expected response corresponding to the expected query, and a fourth prompt into the second artificial intelligence model to obtain feedback from the second artificial intelligence model. The second artificial intelligence model 604 may be the LLM. The electronic apparatus 100 may store the expected query corresponding to the persona, the expected response corresponding to the expected query, and the feedback in the question-and-answer database.

The fourth prompt may include a prompt for requesting feedback from the user corresponding to each persona for a response corresponding to the expected query.

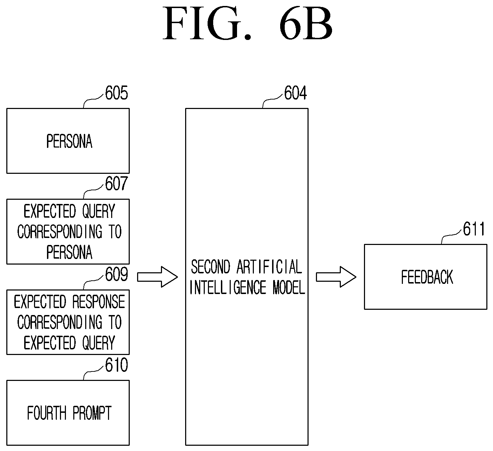

For example, referring to FIG. 6B, the electronic apparatus 100 may input the persona 605, the expected query 607 corresponding to the persona, the expected response 609 corresponding to the expected query, and a fourth prompt 610 into the second artificial intelligence model 604, and may obtain feedback 611 from the second artificial intelligence model 604. For example, the fourth prompt 610 may include text such as "For the expected query and the expected response, what feedback would a viewer of a persona such as {predicted age group: 30s, predicted interest field: film directing, predicted knowledge level: high, loyalty to the series: avid fan, another attribute: director-oriented} (e.g., the persona 605) express? Please express the score for the feedback on a scale of 5 points." The feedback 611 may include text such as "4 points." The electronic apparatus 100 may store the obtained feedback in the question-and-answer database. The electronic apparatus 100 may obtain the feedback for query-and-response from each of the plurality of personas by using the above-described method.

In operation 440, the electronic apparatus 100 may update the plurality of personas stored in the question-and-answer database.

The electronic apparatus 100 may update the plurality of personas stored in the question-and-answer database based on the expected query corresponding to the plurality of personas, the expected response to the expected query, and the feedback.

In the following description, a set of the expected query, the expected response to the expected query, and the feedback is described as evaluation information.

For example, the electronic apparatus 100 may update the second artificial intelligence model based on the evaluation information, and may update, by using the updated second artificial intelligence model, the plurality of personas stored in the question-and-answer database. That is, the electronic apparatus 100 may update the second artificial intelligence model to improve the quality of the expected query and the expected response based on the evaluation information, may generate the plurality of personas by using the updated second artificial intelligence model, and may update the plurality of personas.

The electronic apparatus 100 may update the second artificial intelligence model based on the evaluation information.

For example, the electronic apparatus 100 may input the expected query, the expected response, and a fifth prompt into a third artificial intelligence model to obtain a first score. In addition, the electronic apparatus 100 may input the expected query, the expected response, the feedback, and the fifth prompt into the third artificial intelligence model to obtain a second score. In addition, the electronic apparatus 100 may input the first score and the second score into the second artificial intelligence model to update the second artificial intelligence model.

The third artificial intelligence model may be a model trained to evaluate the quality of an output from the second artificial intelligence model. The third artificial intelligence model may be a model implemented based on deep learning. The third artificial intelligence model may be expressed alternatively using a term such as a reward model or an evaluation model.

For example, the third artificial intelligence model may receive the expected query and the expected response, and may output a score indicating a degree to which the expected response is appropriate. In the following description, the score indicating a degree to which the expected response is appropriate is described as the first score.

In addition, the third artificial intelligence model may receive the expected query, the expected response, and the feedback, and may output a score in which a user evaluation is predicted for the set of the expected query, the expected response, and the feedback. In the following description, the score in which the user evaluation is predicted for the set of the expected query, the expected response, and the feedback is described as the second score. The score in which the user evaluation is predicted may include quantification and prediction of the user evaluation as to whether the set of the expected query, the expected response, and the feedback is a set likely to actually exist. For example, if the expected response to the expected query is appropriate, the feedback thereof may preferably have a high score. Accordingly, "being likely to actually exist" may include a case where feedback having a high score is given if the expected response to the expected query is preferable. In addition, "being likely to actually exist" may include a case where feedback having a low score is given if the expected response to the expected query is not preferable.

On the other hand, "being not likely to actually exist" may include a case where feedback having a low score is given if the expected response to the expected query is preferable. In addition, "being not likely to actually exist" may include a case where feedback having a high score is given if the expected response to the expected query is not preferable.

The fifth prompt may include a prompt for requesting the first score and the second score.

For example, a fifth prompt 613 may include text such as "For the expected query corresponding to each persona and expected responses to the expected query, please generate a score on how appropriate the expected response is. In addition, for the expected query, the expected response to the expected query, and the feedback, please generate a score on how appropriate and likely the expected question, the expected response, and the feedback are with reference to the question-and-answer database. Express each score on a scale of 5 points."

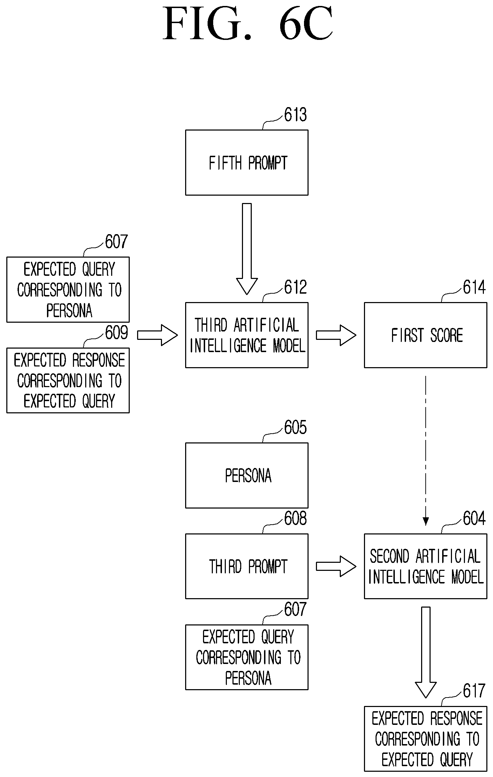

For example, referring to FIG. 6C, the electronic apparatus 100 may input the expected query 607 corresponding to the persona, the expected response 609 corresponding to the expected query, and the fifth prompt 613 into a third artificial intelligence model 612 to obtain a first score 614. The first score 614 may include text such as "3 points."

If the electronic apparatus 100 obtains the first score 614 from the third artificial intelligence model 612, the electronic apparatus 100 may update the second artificial intelligence model 604 based on the first score 614 to enable the second artificial intelligence model 604 to output the expected response having improved quality.

For example, the electronic apparatus 100 may input the first score 614, the persona 605, the expected query 607 corresponding to the persona, and the third prompt 608 into the second artificial intelligence model 604 to newly obtain an expected response 617 to the expected query from the second artificial intelligence model 604. The electronic apparatus 100 may input the newly obtained response 617 into the third artificial intelligence model 612, and may obtain the first score (e.g., 4 points) for the expected query input into the second artificial intelligence model 604 and the expected response generated by the second artificial intelligence model 604 based on the expected query. Here, the second artificial intelligence model 604 may output the expected response 617 to increase the first score 614 obtained from the third artificial intelligence model 612. The electronic apparatus 100 may repeatedly perform an operation of obtaining the expected response 617 from the second artificial intelligence model 604 until the first score 614 reaches a predetermined score. However, the present disclosure is not limited thereto. For example, the electronic apparatus 100 may repeatedly perform the operation of obtaining the expected response based on various conditions, such as performing the operation of obtaining the expected response 617 a predetermined number of times.

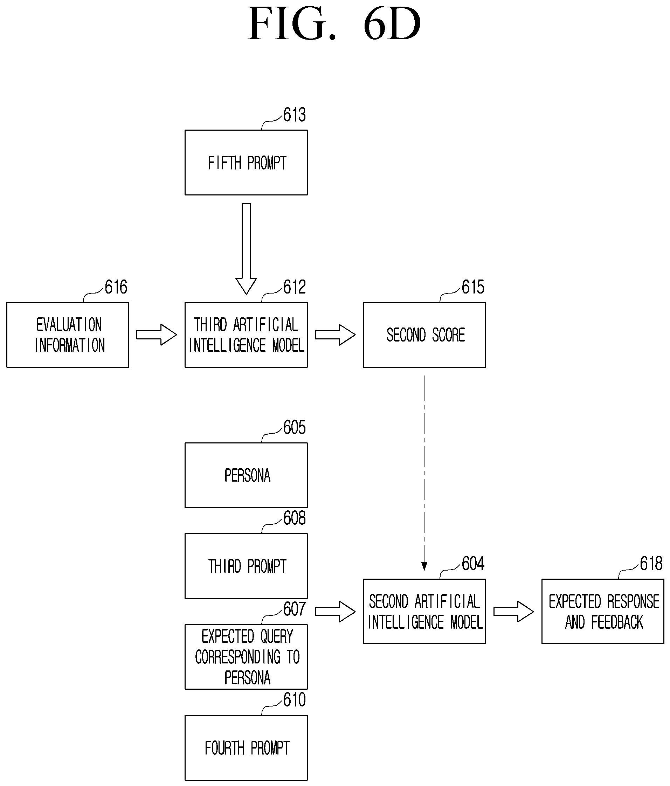

In addition, referring to FIG. 6D, the electronic apparatus 100 may input evaluation information 616 and the fifth prompt 613 into the third artificial intelligence model 612 to obtain a second score 615. The second score 615 may include text such as "1 point."

The electronic apparatus 100 may obtain the second score 615 from the third artificial intelligence model 612, and may update the second artificial intelligence model 604 based on the second score 615 to enable the second artificial intelligence model 604 to output a pair 618 of the expected response and the feedback having improved quality.

For example, if the electronic apparatus 100 inputs the second score 615, the persona 605, the expected query 607 corresponding to the persona, the third prompt 608, and the fourth prompt 610 into the second artificial intelligence model 604, the electronic apparatus 100 may newly obtain, from the second artificial intelligence model 604, the pair 618 of the expected response and the feedback. Here, the second artificial intelligence model 604 may output the pair 618 of the expected response and the feedback to increase the second score 615 obtained from the third artificial intelligence model 612. The electronic apparatus 100 may input the newly obtained pair 618 of the expected response and the feedback into the third artificial intelligence model 612, and may obtain the second score (e.g., 3 points) for the expected query 607 input into the second artificial intelligence model 604 and the expected response and the feedback generated by the second artificial intelligence model 604 based on the expected query. The electronic apparatus 100 may repeatedly perform an operation of obtaining the pair 618 of the expected response and the feedback from the second artificial intelligence model 604 until the second score 615 reaches a predetermined score. However, the present disclosure is not limited thereto. For example, the electronic apparatus 100 may repeatedly perform the operation of obtaining a pair of the expected response and the feedback based on various conditions, such as performing the operation of obtaining the pair 618 of the expected response and the feedback a predetermined number of times.

In the above-described example, the electronic apparatus 100 may generate the persona 605 and high-quality expected query-and-response corresponding to the persona 605.

In an embodiment, the electronic apparatus 100 may train the third artificial intelligence model by inputting, into the third artificial intelligence model, a query input by the user, a response to the query generated by the second artificial intelligence model, the expected query generated by the second artificial intelligence model, and a response corresponding to the expected query and the feedback. The third artificial intelligence model may generate a more accurate first score and second score through training.

If the electronic apparatus 100 generates a persona and expected query-and-response corresponding to the persona, the electronic apparatus 100 may provide a response to a query input by the user.

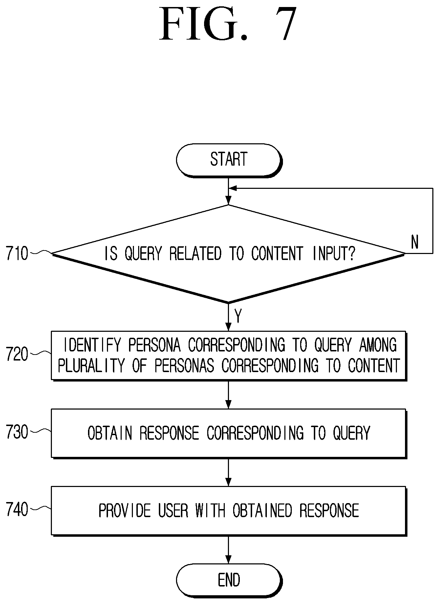

A specific method in which the electronic apparatus 100 provides a response to the user is described with reference to FIG. 7. The processor 120 may perform at least one of the operations illustrated in FIG. 7. If the instructions stored in the memory 110 are executed individually or collectively by the processor 120, the electronic apparatus 100 may perform the operations illustrated in FIG. 7.

In operation 710, the electronic apparatus 100 may receive the query related to the content based on user input.

As described above, the content may include video content such as movies, dramas, or short forms.

The electronic apparatus 100 may receive, through the communication circuit 130, the query related to the content based on the user input.

For example, if a touch input is received for an icon displayed on the display 210, the user terminal device 200 may execute an application installed on the user terminal device 200. In the present disclosure, the application may be an application that provides content.

The user terminal device 200 may display, on the display, a user interface for playing content. The user terminal device 200 may receive a touch input corresponding to content to be played among a plurality of content lists displayed on the user interface. If the touch input is received, the user terminal device 200 may transmit, to the electronic apparatus 100, a signal for requesting transmission of data corresponding to the content for which the touch input is received. The electronic apparatus 100 may transmit, to the user terminal device 200, the data corresponding to the content based on the received signal.

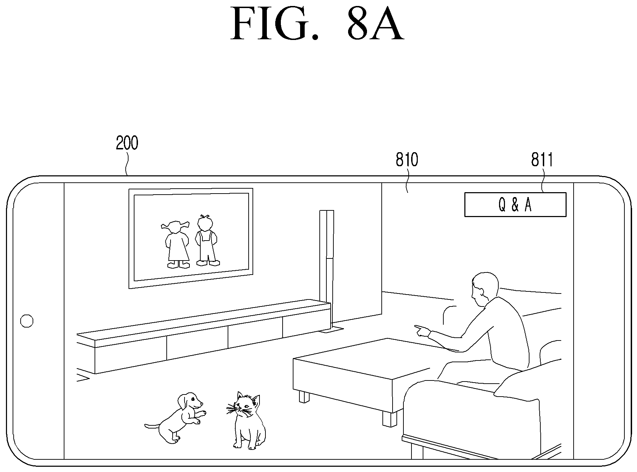

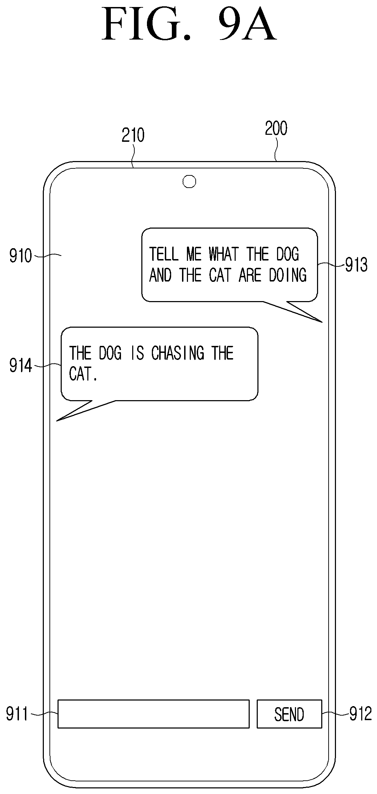

Referring to FIGS. 8A and 9A, the electronic apparatus 100 may receive data corresponding to content from the server, and may display a content playback screen 810 on the display 210.

An application for playing content may include an application that provides the user with a content query and answer service. The content query and answer service may include a service in which the user may receive a response corresponding to a query if the user inputs the query about content.

For example, the content query and answer service may include a service in which the electronic apparatus 100 may provide an appropriate response to a query to the user based on an analysis of the content if the electronic apparatus 100 receives the query related to the content from the user.

In the present disclosure, the query related to the content may include, for example, a question related to content details, characters, filming techniques, an atmosphere of a specific scene, or the like. As an example, the question corresponding to content may include a question such as "Please summarize the content of movie OO", and "What is the personality of the main character in movie OO like?"

The user terminal device 200 may display, in a region of the playback screen 810, a button 811 through which the user may make the query related to the content.

If a touch input on the button 811 is received, the user terminal device 200 may display, on the display 210, an input field 911 for inputting the query related to the content.

If a touch input on the input field 911 is received, the user terminal device 200 may display, on the display, a soft keyboard through which the user may input text. The soft keyboard may include a virtual keyboard displayed on the display. If a touch input on the soft keyboard is received, the user terminal device 200 may display, in the input field 911, text corresponding to a position at which the touch input is received.

If a touch input on a button 912 for requesting transmission of the input text to the electronic apparatus 100 is received, the user terminal device 200 may transmit, to the electronic apparatus 100, the text input by the user. The electronic apparatus 100 may identify the received text as a query input by the user. The electronic apparatus 100 may display a received text 913 on the display 210. In addition, the electronic apparatus 100 may display, on the display 210, text 914 including a response corresponding to the query.

The above example describes that the electronic apparatus 100 receives a query based on a touch input from the user. However, the present disclosure is not limited thereto, and the electronic apparatus 100 may also receive a query based on a voice input from the user.

For example, the user terminal device 200 may include a microphone. If the user terminal device 200 receives the voice input from the user through the microphone, the user terminal device 200 may change the received voice data into a text form. The user terminal device 200 may transmit, to the electronic apparatus 100, a user question changed into the text form.

In addition, in an embodiment, the electronic apparatus 100 may receive voice data and may change a voice signal into a text form. In addition, the user terminal device 200 may transmit data to a separate server capable of changing voice data into a text form. The separate server capable of changing voice data into a text form may change the voice data into the text form and may transmit the voice data to the electronic apparatus 100.

In addition, the above description provided with referenc to FIGS. 8A and 9A describes that the user terminal device 200 provides the user with the content query and answer service. However, the present disclosure is not limited thereto, and the content query and answer service may be provided by various devices.

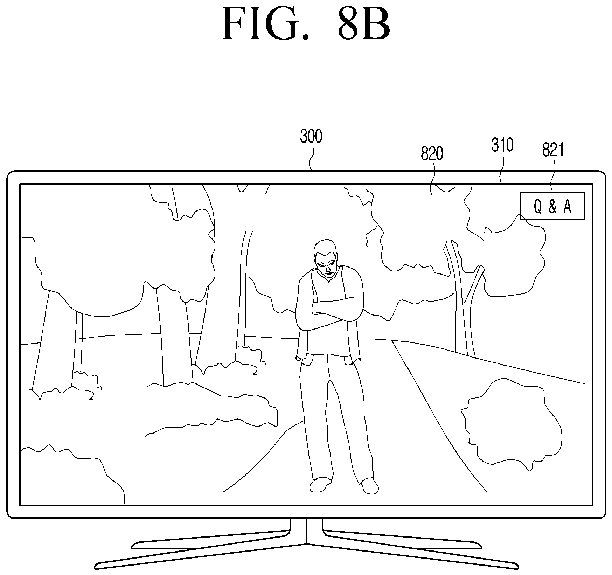

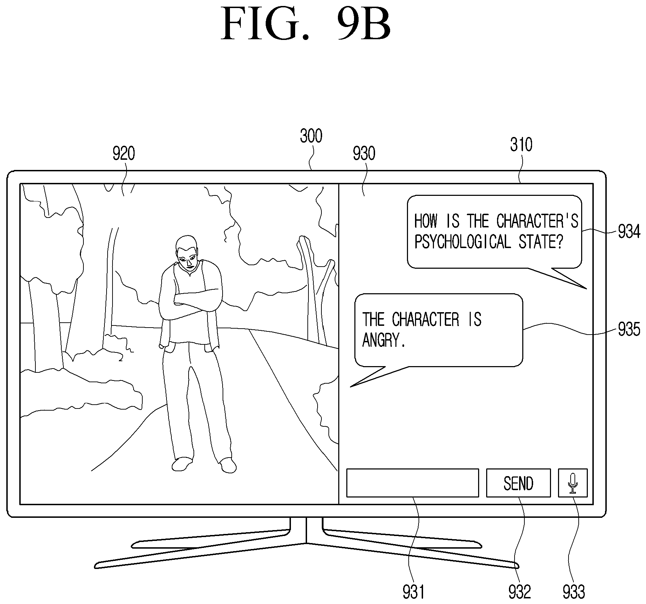

For example, referring to FIGS. 8B and 9B, a display device 300 may provide the user with the content query and answer service.

In an embodiment, referring to FIG. 8B, the display device 300 may display content 820 on a display screen 310. The display device 300 may display, in a region of the display screen 310, a button 821 through which the user may make a query related to content.

If an input on the button 821 is received, the display device 300 may display, on the display screen 310, a screen for providing the content query and answer service.

For example, the display device 300 may divide the display screen 310 into a plurality of regions and may simultaneously display content and a screen for providing the content query and answer service.

Referring to FIG. 9B, the display device 300 may divide the display screen 310 into two regions 920 and 930. The display device 300 may display content in the first region 920 and may display the screen for providing the content query and answer service in the second region 930.

As described above, an input field 931, a button 932 for transmitting text input into the input field 931 to the server, and a button 933 for inputting a query by voice may be displayed in the second region 930 that provides the query and answer service.

In addition, as described above, if a user query is transmitted to the server, the display device 300 may also display, on the display screen 310, a user interface (UI) element 934 for displaying the user query and a UI element 935 for displaying a response corresponding to the query.

Descriptions of UI elements displayed in the second region 930 is the same as those described above, and redundant descriptions thereof are thus omitted.

In operation 720, the electronic apparatus 100 may identify a persona corresponding to a query among a plurality of personas corresponding to content based on the question-and-answer database.

If the electronic apparatus 100 generates a persona and expected query-and-response corresponding to the persona, the electronic apparatus 100 may identify a persona corresponding to a query received from the user.

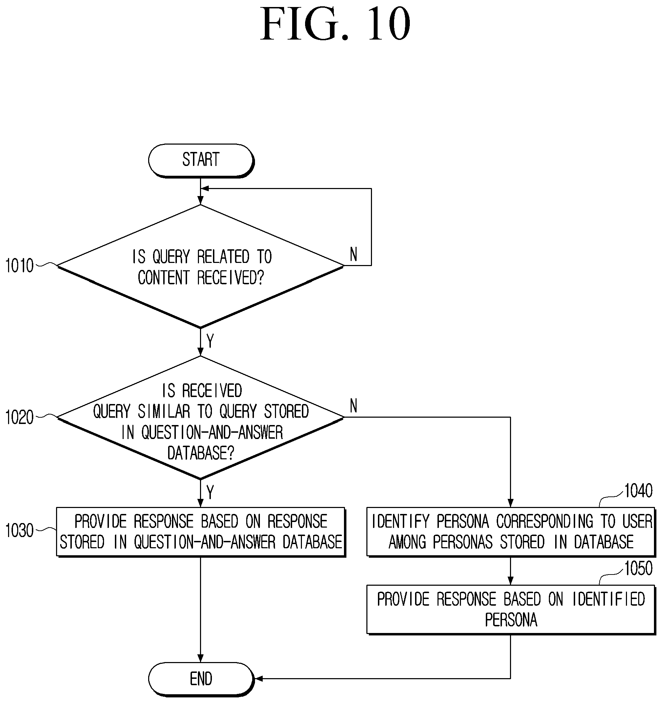

Before identifying the persona corresponding to the query received from the user, the electronic apparatus 100 may identify a similarity between the query received from the user and a query stored in the question-and-answer database. If the similarity is equal to or less than a predetermined value, the electronic apparatus 100 may identify the persona corresponding to the query received from the user. A description thereof is provided with reference to FIG. 10.

In operation 1010, the electronic apparatus 100 may identify whether the query related to the content is received based on the user input.

The electronic apparatus 100 may identify whether a query is received based on the user input through the communication circuit 130. A description thereof is the same as described above.

In operation 1020, the electronic apparatus 100 may identify whether the received query is similar to the query stored in the question-and-answer database.

The electronic apparatus 100 may identify the similarity between the query received from the user and the plurality of queries stored in the question-and-answer database.

For example, the electronic apparatus 100 may identify a similarity between respective queries. A method by which the electronic apparatus 100 identifies a similarity between queries may include a method of converting each sentence into a vector and identifying a cosine similarity. The electronic apparatus 100 may identify that, the closer the cosine similarity is to 1, the higher the similarity between the respective sentences is.

In addition, the electronic apparatus 100 may include a Euclidean distance in which a sentence is coverted into a vector and a straight-line distance between vectors is calculated. The electronic apparatus 100 may identify that, the smaller the identified Euclidean distance is, the higher the similarity is. A method by which the electronic apparatus 100 identifies the similarity between sentences is not limited to the above-described example, and the electronic apparatus 100 may identify the similarity between sentences by using various methods. In addition, the electronic apparatus 100 may identify the similarity between sentences based on identification of a context included in a sentence by using the above-described method and the second artificial intelligence model.

If a similarity between respective queries exceeds a threshold value, the electronic apparatus 100 may identify that the query received from the user and the query included in the question-and-answer database are similar to each other. On the other hand, if the similarity between respective queries is less than the threshold value, the electronic apparatus 100 may identify that the query received from the user and the query included in the question-and-answer database are dissimilar to each other.

In operations 1020-Y and 1030, the electronic apparatus 100 may provide a response to the user based on a response stored in the question-and-answer database if the query received from the user and the query included in the question-and-answer database are similar to each other.

The electronic apparatus 100 may provide to the user a response corresponding to the response included in the question-and-answer database. The electronic apparatus 100 may obtain, from the question-and-answer database, a response corresponding to the identified query if it is identified that a query whose similarity is equal to or greater than the threshold value exists among the plurality of queries stored in the question-and-answer database.

For example, the electronic apparatus 100 may identify a response corresponding to the query received from the user among the queries stored in the question-and-answer database if it is identified that the query received from the user and the query included in the question-and-answer database are similar to each other.

The electronic apparatus 100 may identify the identified response as the response corresponding to the query received from the user, and may transmit, to the user terminal device 200, a control signal for instructing display of the response on the display 210.

In operations 1120-N and 1140, the electronic apparatus 100 may identify a persona corresponding to the user among the personas stored in the question-and-answer database.

If the query received from the user and the query included in the question-and-answer database are dissimilar to each other, the electronic apparatus 100 may identify the persona corresponding to the user among the plurality of personas stored in the question-and-answer database.

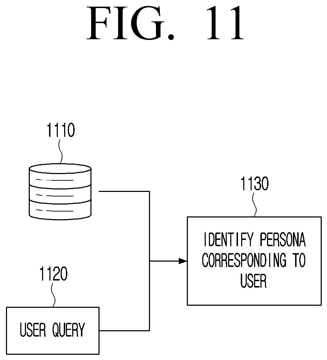

For example, referring to FIG. 11, the electronic apparatus 100 may identify a similarity between a query 1110 included in the question-and-answer database and a query 1120 received from the user. The method by which the electronic apparatus 100 identifies the similarity between queries is the same as described above.

The electronic apparatus 100 may identify, respectively, the similarity between the query 1110 corresponding to each of the plurality of personas and the query 1120 received from the user. The electronic apparatus 100 may obtain an average value of the similarities for the queries corresponding to respective personas. The electronic apparatus 100 may obtain, as the persona corresponding to the user query, a persona having the greatest average value of the similarities for the queries corresponding to the respective personas (1130).

For example, the electronic apparatus 100 may identify that an average value of a similarity between queries corresponding to a first persona is 60, an average value of a similarity between queries corresponding to a second persona is 40, and an average value of a similarity between queries corresponding to a third persona is 10. Here, the persona having the highest average value of the similarity between the queries is the first persona, and the electronic apparatus 100 may thus identify that the persona corresponding to the user is the first persona.

In operation 1050, the electronic apparatus 100 may provide the user with the response corresponding to the query based on the identified persona. A detailed description thereof is provided based on operation 730.

In operation 730, the electronic apparatus 100 may obtain the response corresponding to the query based on the identified persona.

The electronic apparatus 100 may obtain the response corresponding to the query based on the identified persona if it is identified that no query whose similarity is equal to or greater than the threshold value exists among the plurality of queries.

The electronic apparatus 100 may identify the persona corresponding to the user among the personas stored in the question-and-answer database if it is identified that a query included in the question-and-answer database is dissimilar to the query received from the user. If the persona is identified, the electronic apparatus 100 may input the query into the second artificial intelligence model to generate a response based on the user attribute.

In operation 740, the electronic apparatus 100 may provide the user with the obtained response.

The electronic apparatus 100 may transmit, to the user terminal device through the communication circuit 130, the control signal for instructing the display of the generated response on the display 210 of the user terminal device.

The electronic apparatus 100 may transmit, to the user terminal device 200, the control signal for instructing the display of the generated response on the display 210 of the user terminal device 200.

Based on receiving the control signal, the user terminal device 200 may display, on the display 210, a response 1040 generated by the electronic apparatus 100 as illustrated in FIG. 10.

Based on the operations described above with reference to FIG. 7, the electronic apparatus 100 may generate an appropriate response based on the user attribute.

The electronic apparatus 100 may perform an operation of optimizing the knowledge graph to generate a response more appropriately and to perform memory management more efficiently.

For example, if the electronic apparatus 100 generates the persona, the expected query corresponding to each persona, and the expected response to the expected query, the electronic apparatus 100 may perform the operation of optimizing the knowledge graph.

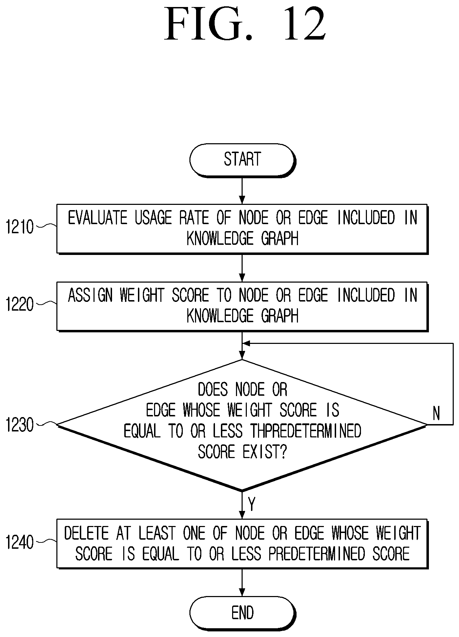

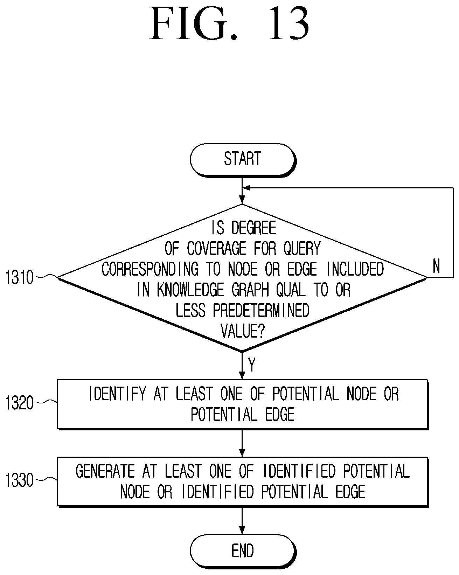

The operation of optimizing the knowledge graph may include an operation of deleting or adding nodes and edges included in the knowledge graph. The operation in which the electronic apparatus 100 optimizes the knowledge graph is described with reference to FIGS. 12 and 13.

FIG. 12 is a flowchart illustrating the operation of deleting nodes and edges included in the knowledge graph according to at least one embodiment of the present disclosure.

The electronic apparatus 100 may obtain a usage rate of at least one of the node or the edge used to obtain a response corresponding to a query, and may update the knowledge graph based on the obtained usage rate.

In operation 1210, the electronic apparatus 100 may evaluate the usage rate of the node or the edge included in the knowledge graph. The usage rate of the node or the edge included in the knowledge graph may include a ratio of a number of times in which the second artificial intelligence model uses respective nodes or edges included in the knowledge graph to generate a response to the number of queries stored in the question-and-answer database.

Here, the queries stored in the question-and-answer database may include the expected queries generated by the second artificial intelligence model and the queries received from the actual users.

The electronic apparatus 100 may identify the number of queries stored in the question-and-answer database, and may identify a number of times in which the respective nodes and edges included in the knowledge graph are used to generate the response corresponding to the query. The electronic apparatus 100 may identify, as the usage rate of at least one of the node or the edge, a number of times in which at least one of the node or the edge is used with respect to the number of queries stored in the question-and-answer database.

In operation 1220, the electronic apparatus 100 may assign a weight score to the node or the edge included in the knowledge graph.

The electronic apparatus 100 may assign a weight score to each node and each edge based on identification of usage rates of nodes and edges.

The weight score may be proportional to the usage rate of the node or the edge.

For example, it is assumed that 100 queries are stored in the question-and-answer database. The electronic apparatus 100 may identify that the number of times in which a first node stored in the knowledge graph is used to generate responses corresponding to 100 queries is 90 times. In addition, the electronic apparatus 100 may identify that the number of uses of a second node is 95 times and the number of uses of a third node is 30 times.

The electronic apparatus 100 may identify that a usage rate of the first node is 0.9, a usage rate of the second node is 0.95, and a usage rate of the third node is 0.3.

The electronic apparatus 100 may assign the weight score to each node based on the usage rate. Accordingly, the electronic apparatus 100 may identify that the weight score of the second node is the highest and the weight score of the third node is the lowest. A method by which the electronic apparatus 100 assigns the weight score to each node based on the usage rate may be determined by a rule-based method used by the processor 120. The rule-based method may be a method by which the electronic apparatus 100 uses a predetermined rule to perform a specific operation.

In operation 1230, the electronic apparatus 100 may identify a node or an edge whose weight score is equal to or less than a predetermined score among the nodes or the edges included in the knowledge graph.

If the electronic apparatus 100 assigns the weight score to each of the node and the edge, the electronic apparatus 100 may identify the node or the edge whose score is equal to or less than the predetermined score.

If a node or an edge is included in a plurality of knowledge graphs, the electronic apparatus 100 may identify the node or the edge included in the plurality of knowledge graphs, rather than identifying only a node or an edge included in a specific knowledge graph.

In operations 1230-Y and 1240, the electronic apparatus 100 may delete, from the knowledge graph, at least one of the node or the edge whose weight score is equal to or less than the predetermined score.

The electronic apparatus 100 may delete the identified node or edge from the knowledge graph.

If a node or an edge is included in a plurality of knowledge graphs, the electronic apparatus 100 may delete the node or the edge included in the plurality of knowledge graphs, rather than deleting only the node or the edge included in a specific knowledge graph.

On the other hand, electronic apparatus 100 may not delete, from the knowledge graph, the node or the edge whose score is equal to or greater than the predetermined score among the nodes or the edges.

Based on the operation illustrated in FIG. 12, the electronic apparatus 100 may efficiently manage the memory by deleting a node or an edge having a low usage rate from the knowledge graph.

The electronic apparatus 100 may delete a node or an edge from the knowledge graph, and may also add a node or an edge. A detailed operation in which the electronic apparatus 100 adds a node or an edge to the knowledge graph is described with reference to FIG. 13.

FIG. 13 is a flowchart illustrating an operation of generating a node or an edge according to at least one embodiment of the present disclosure.

In operation 1310, the electronic apparatus 100 may identify whether a degree of coverage for a query corresponding to the node or the edge included in the knowledge graph is equal to or less than the predetermined value.

The degree of coverage for the query corresponding to the node or the edge may include a numerical value indicating whether the electronic apparatus 100 may generate a response based on the existing knowledge graph if the electronic apparatus 100 generates the response corresponding to the query. The numerical value indicating whether the electronic apparatus 100 may generate the response based on the knowledge graph may include a ratio of the number of queries for which a response may be generated based on the knowledge graph to the number of queries which are stored in the question-and-answer database.

Here, the queries stored in the question-and-answer database may include the query received from the user and the expected query generated by the second artificial intelligence model.

The electronic apparatus 100 may identify that the degree of coverage for the query of the node or the edge is high if, for the query, the electronic apparatus 100 may identify facts of the content to generate a response based on the knowledge graph.

For example, the electronic apparatus 100 may receive a question such as "What are the dog and the cat doing?" The electronic apparatus 100 may refer to the knowledge graph (e.g., FIG. 5) to identify that the dog and the cat are included in the nodes included in the knowledge graph. In addition, the electronic apparatus 100 may refer to the knowledge graph to identify that the dog and the cat chase each other based on the edges included in the knowledge graph. Accordingly, for the question such as "What are the dog and the cat doing?", the electronic apparatus 100 may generate a response such as "The dog and the cat are chasing each other." The electronic apparatus 100 may generate a response to the received query based on the knowledge graph, and may thus identify that the query stored in the question-and-answer database may be covered by using the node or the edge included in the knowledge graph.

The electronic apparatus 100 may fail to generate a response based on the knowledge graph among the queries stored in the question-and-answer database. For example, if the electronic apparatus 100 is incapable of identifying the facts of the content to generate a response based on the knowledge graph, the electronic apparatus 100 may fail to generate the response.

Accordingly, the electronic apparatus 100 may identify that the degree of coverage for the query corresponding to the node or the edge included in the knowledge graph is low if it is identified that the number of queries for which a response is incapable of being generated by using the knowledge graph with respect to the number of queries stored in the question-and-answer database is equal to or greater than a predetermined value.

In operation 1320, the electronic apparatus 100 may identify at least one of a potential node or a potential edge.

The electronic apparatus 100 may newly generate a node or an edge included in the knowledge graph if it is identified that the degree of coverage for the query corresponding to the node or the edge included in the knowledge graph is low.

For example, the electronic apparatus 100 may identify at least one of the potential node or the potential edge if the electronic apparatus 100 fails to generate a response based on the knowledge graph. The potential node may include a node scheduled to be added to the knowledge graph. In addition, the potential edge may include an edge scheduled to be added to the knowledge graph.

Accordingly, the electronic apparatus 100 may identify the potential node or the potential edge to generate the response corresponding to the query if the number of queries among the queries stored in the question-and-answer database for which the response is incapable of being generated by using the knowledge graph is equal to or greater than a predetermined ratio of a total number of queries.

For example, the electronic apparatus 100 may receive a question such as "What are the colors of the dog and the cat?" It is assumed that the knowledge graph (e.g., FIG. 5) includes information on the dog and the cat, and does not include information on colors of the dog and the cat. The electronic apparatus 100 may identify that a response is incapable of being generated by referring to the knowledge graph. The electronic apparatus 100 may identify that the information on the colors of the dog and the cat is to be obtained if the electronic apparatus 100 is incapable of generating a response by referring to the knowledge graph for the query, and if the number of queries related to the colors of the cat and the dog with respect to the number of queries stored in the question-and-answer database is equal to or greater than a predetermined ratio. Here, the electronic apparatus 100 may identify the information on colors of the dog and the cat as the potential node. The electronic apparatus 100 may store, in the memory 110, keywords of nodes to be generated (e.g., the color of the dog and the color of the cat).

A method by which the electronic apparatus 100 identifies the potential node or the potential edge is not limited to the above-described example, and the electronic apparatus 100 may identify the potential node or the potential edge by using various methods. In addition, the electronic apparatus 100 may identify only one of the potential node and the potential edge, or may identify both the potential node and the potential edge.

In operation 1330, the electronic apparatus 100 may generate at least one of the identified potential node or the identified potential edge.

If the electronic apparatus 100 identifies at least one of the potential node or the potential edge, the electronic apparatus 100 may analyze content and may identify information on the potential node or the potential edge.

As described above, the electronic apparatus 100 may analyze content by using the first artificial intelligence model. The electronic apparatus 100 may identify the information on at least one of the potential node or the potential edge based on a content analysis result.

If the electronic apparatus 100 identifies the information on the potential node or the potential edge, the electronic apparatus 100 may add the potential node or the potential edge as a node or an edge to the knowledge graph.

If a question corresponding to the potential node or the potential edge is about a specific point in time of content, the electronic apparatus 100 may add the node or the edge to the knowledge graph for the specific point in time of the content. For example, the electronic apparatus 100 may receive a question such as "I want to ask a question about a scene displayed if a playback time of the content reaches 30 minutes. Here, what action did the main character take?" The electronic apparatus 100 may analyze the content and, based on an analysis result, may add the node or the edge regarding the action of the main character to the knowledge graph corresponding to the scene displayed if the playback time of the content reaches 30 minutes.

In addition, if the question corresponding to the potential node or the potential edge is about the entire content rather than about a specific point in time of the content, the electronic apparatus 100 may add the node or the edge to the entire knowledge graph of the content. For example, the electronic apparatus 100 may receive the question such as "What are the colors of the dog and the cat?" The electronic apparatus 100 may analyze the content and, based on an analysis result, may add the node or the edge related to the colors of the cat and the dog to the knowledge graph including nodes corresponding to the cat and the dog among the knowledge graphs of the content.

On the other hand, the electronic apparatus 100 may not add a node or an edge to the knowledge graph if the degree of coverage for the query corresponding to the node or the edge included in the knowledge graph performed in operation 1310 exceeds the predetermined value.

In the above-described example, a plurality of artificial intelligence models used to perform the operations of the electronic apparatus 100 relate to a technology for automatically processing human experiential information into knowledge data, and may perform knowledge construction (e.g., data generation/classification), knowledge management (e.g., data utilization), or the like.

In addition, the above-described example assumes and describes that the electronic apparatus 100 is the server device. However, an operation according to the present disclosure may also be performed on the user terminal device (e.g., a smartphone, a TV, or a tablet PC).

If the electronic apparatus 100 is implemented as the user terminal device, the electronic apparatus 100 may include a display. If the electronic apparatus 100 includes a display, the electronic apparatus 100 may control the display to display content and the user interface related to the contents.

In addition, the electronic apparatus 100 may perform an operation of generating the persona by using the plurality of artificial intelligence models and the processors stored in the memory of the electronic apparatus, an operation of generating the expected query and a response based on the generated persona and updating the artificial intelligence model, and an operation of identifying the persona corresponding to the user.

In addition, if the electronic apparatus 100 is implemented as the user terminal device, the electronic apparatus 100 may not include a display unit or the external display device plays content. In this case, the electronic apparatus 100 may include a video or audio output port. The audio or video output port may include a port for transmitting audio and video signals to a display device. The audio or video output port may include, for example, high-definition multimedia interface (HDMI), DisplayPort (DP), or Thunderbolt. The electronic apparatus 100 may simultaneously transmit the video and audio signals to the display device by using the audio or video output port.

In addition, the electronic apparatus 100 may individually transmit the video and audio signals to the display device by using the video or audio output port.

The electronic apparatus 100 may transmit the video and audio signals to the external display device through the video or audio output port to enable content to be played by the external display device. Accordingly, the electronic apparatus 100 may control to enable content to be displayed on a display included in the external display device, or to enable the user interface related to the content to be displayed.

In addition, a remote-control application may be installed on the electronic apparatus 100. The remote-control application may include an application that allows the electronic apparatus 100 to control the external display device like a remote controller. The electronic apparatus 100 may transmit various control signals to the external display device by using the remote-control application. Applications that may be installed on the electronic apparatus 100 are not limited to the remote-control application, and various applications may be installed on the electronic apparatus 100.

According to an embodiment of the disclosure, an electronic apparatus may comprise a memory storing instructions and at least one processor including processing circuitry. The instructions, when executed individually or collectively by the at least one processor, may cause the electronic apparatus to obtain a persona corresponding to a query among a plurality of personas corresponding to content based on a database if user input corresponding to the query related to the content is received, and provide a response corresponding to the query based on the obtained persona, wherein the plurality of personas may be based on a knowledge graph corresponding to the content and the database. This may improve the relevance and quality of the generated response. By tailoring the answer to a predicted user persona rather than providing a generic answer, the system may increase user satisfaction and provide a more meaningful interaction that is directly adapted to the user's likely interests and knowledge level.

The instructions, when executed individually or collectively by the at least one processor, may cause the electronic apparatus to obtain, by using an artificial intelligence model, the plurality of personas corresponding to the content based on the knowledge graph corresponding to the content, the database, and a first prompt, the first prompt including a prompt corresponding to a request for predicting an attribute of a user corresponding to the content for a plurality of queries in the database based on the knowledge graph corresponding to the content. This may automate the creation of user personas and enable scalability. Instead of relying on manual definition, the AI model may autonomously discover complex and non-obvious user archetypes from the content data, allowing the system to be applied to a vast amount of different content without human intervention.

The instructions, when executed individually or collectively by the at least one processor, may cause the electronic apparatus to obtain evaluation information corresponding to an expected query corresponding to the persona, an expected response to the expected query, and feedback on the expected response for each of the plurality of personas; and update, by using an updated artificial intelligence model, the plurality of personas based on the evaluation information. This may enable a self-improving system. By generating and evaluating its own synthetic data, the system may continuously refine the accuracy of its personas and the quality of its AI model over time, leading to a progressive increase in system performance and response quality without requiring new real-world user data.

The instructions, when executed individually or collectively by the at least one processor, may cause the electronic apparatus to obtain, by using the artificial intelligence model, the expected query based on the persona, the knowledge graph corresponding to the content, and a second prompt; obtain, by using the artificial intelligence model, the expected response based on the persona, the knowledge graph corresponding to the content, the expected query, and a third prompt; and obtain, by using a second artificial intelligence model, the feedback based on the persona, the knowledge graph corresponding to the content, the expected query, the expected response, and a fourth prompt, the second prompt including a prompt corresponding to a request for the expected query by the user corresponding to the persona based on the knowledge graph corresponding to the content, the third prompt including a prompt corresponding to a request for the expected response to the expected query by the user corresponding to the persona based on the knowledge graph corresponding to the content, and the fourth prompt including a prompt corresponding to a request for the feedback on the expected response by the user corresponding to the persona based on the knowledge graph corresponding to the content. This may automate the generation of a complete and structured synthetic training dataset. By using a sequence of prompts, the system may create a coherent set of query, response, and feedback data that is more effective for training the AI model than unstructured or incomplete data, leading to more robust and realistic model behavior.

The instructions, when executed individually or collectively by the at least one processor, may cause the electronic apparatus to obtain, by using an evaluation model, a first score based on a prompt corresponding to a request for a score related to quality of the expected query and the expected response; and update the artificial intelligence model based on the first score. This may improve the direct quality and appropriateness of the generated responses. By optimizing for a high score that directly measures the query-response pairing, the system is fine-tuned to produce answers that are not only persona-relevant but also factually and contextually appropriate.

The instructions, when executed individually or collectively by the at least one processor, may cause the electronic apparatus to: obtain, by using an evaluation model, a second score based on a set including the expected query, the expected response, and the feedback, and a prompt corresponding to a request for a score related to quality of the set; and update the artificial intelligence model based on the second score.This may improve the overall plausibility and human-likeness of the simulated user interactions. By evaluating the entire interaction loop, the system learns to generate data that is holistically coherent, which results in a more realistically trained and robust AI model capable of handling more nuanced user interactions.

The knowledge graph corresponding to the content may include at least one node, at least one edge, or a text description of a frame for each of the plurality of frames included in the content, the node may correspond to an object included in the frame, and the edge may correspond to a relationship between the objects included in the frame. This may create a structured and machine-readable representation of the content's semantic information. This graph structure may allow the AI model to efficiently query, traverse, and reason about the complex relationships between characters, objects, and events within the content, which is far more efficient than analyzing raw video data for every query.

The instructions, when executed individually or collectively by the at least one processor, may cause the electronic apparatus to obtain a usage rate of at least one of the node or the edge corresponding to obtaining the response to the query; and update the knowledge graph based on the obtained usage rate. This may improve memory efficiency and reduce data storage requirements. By dynamically pruning the knowledge graph of irrelevant or rarely used information, the system may reduce its memory footprint and may speed up future graph traversal operations, making the overall system more performant.

The instructions, when executed individually or collectively by the at least one processor, may cause the electronic apparatus to obtain an average value of similarities for each of the plurality of personas based on a similarity between the query and a plurality of queries corresponding to the plurality of personas stored in the database; and identify, as the persona corresponding to the query, a persona having a greatest value among the obtained average values. This may provide a robust and deterministic method for identifying the most relevant user persona. Instead of a heuristic guess, this method uses a quantifiable metric to ensure that the subsequent personalization is based on the best possible match, leading to more accurate and reliable response tailoring.

The instructions, when executed individually or collectively by the at least one processor, may cause the electronic apparatus to identify a similarity between the query and a plurality of queries in the database; obtain, from the database, the response corresponding to the query equal to or greater than a threshold value and provide the response if the query whose similarity is equal to or greater than the threshold value exists among the plurality of queries; and obtain the response corresponding to the query based on the obtained persona if no query whose similarity is equal to or greater than the threshold value exists among the plurality of queries. This may reduce system latency and computational load. By implementing a two-tiered response strategy, the system may avoid the computationally expensive AI-driven personalization process for common or simple queries, resorting to it only when necessary. This may create a more efficient and responsive user experience. The electronic apparatus may employ an adaptive, multi-path response strategy based on the characteristics of a received user query. This strategy may involve determining a similarity value between the user query and a plurality of queries stored in a database. Upon determining that the similarity value exceeds a predetermined threshold, the apparatus may be configured to perform a first action, such as selecting and providing the corresponding stored response, which provides an efficient, low-latency response path. Conversely, upon determining that the similarity value is below the predetermined threshold, the apparatus may be configured to perform a second, distinct action. This second action may comprise performing the steps of identifying a user persona corresponding to the query and generating a new, personalized response based on that identified persona, ensuring that novel or complex queries are handled with maximum relevance and quality.

According to an embodiment of the disclosure, a control method of an electronic apparatus may comprise obtaining a persona corresponding to a query among a plurality of personas corresponding to content based on a database if user input corresponding to the query related to the content is received; and providing a response corresponding to the query based on the obtained persona, the plurality of personas being based on a knowledge graph corresponding to the content and the database. This may improve the relevance and user satisfaction of the provided response. By adapting the answer to a specific user persona, the method may transform a generic query-and-answer interaction into a personalized dialogue, making the information more engaging and useful for the user.

The method may comprise obtaining, by using an artificial intelligence model, the plurality of personas corresponding to the content based on the knowledge graph corresponding to the content, the database, and a first prompt, the first prompt including a prompt corresponding to a request for predicting an attribute of a user corresponding to the content for a plurality of queries in the database based on the knowledge graph corresponding to the content. This may automate the creation of rich and diverse user personas. This may allow the method to be applied to a large and varied library of content without manual effort, enabling a scalable personalization system that may discover complex user profiles autonomously.

The method may comprise obtaining evaluation information corresponding to an expected query corresponding to the persona, an expected response to the expected query, and feedback on the expected response for each of the plurality of personas; and updating, by using an updated artificial intelligence model, the plurality of personas based on the evaluation information. This may create a self-improving feedback loop within the system. This may allow the method to continuously learn and enhance the quality of its personas and the underlying AI model over time, leading to a progressive improvement in system performance and the accuracy of the personalized responses.

Updating of the plurality of personas may include obtaining, by using the artificial intelligence model, the expected query based on the persona, the knowledge graph corresponding to the content, and a second prompt; obtaining, by using the artificial intelligence model, the expected response based on the persona, the knowledge graph corresponding to the content, the expected query, and a third prompt; and obtaining, by using a second artificial intelligence model, the feedback based on the persona, the knowledge graph corresponding to the content, the expected query, the expected response, and a fourth prompt, the second prompt including a prompt corresponding to a request for the expected query by the user corresponding to the persona based on the knowledge graph corresponding to the content, the third prompt including a prompt corresponding to a request for the expected response to the expected query by the user corresponding to the persona based on the knowledge graph corresponding to the content, and the fourth prompt including a prompt corresponding to a request for the feedback on the expected response by the user corresponding to the persona based on the knowledge graph corresponding to the content. This may automatically generate a complete and structured training dataset for the AI model. By using a sequence of dedicated prompts, the method may create a coherent set of query, response, and feedback data, which is more effective for training and leads to a more robust and realistically behaving AI model.

Updating of the artificial intelligence model may include obtaining, by using an evaluation model, a first score based on a prompt corresponding to a request for a score related to quality of the expected query and the expected response; and updating the artificial intelligence model based on the first score. This may enable a targeted and quantifiable optimization of the AI model's output quality. By focusing the update process on a specific score that measures the appropriateness of the response, the method may ensure that the AI model is specifically fine-tuned to produce answers that are of a higher quality and contextual relevance.

Although the various embodiments have been respectively described above, the respective embodiments may not necessarily be implemented individually and may be entirely or partially combined with at least one other embodiment to be implemented together in a single product.

Meanwhile, an embodiment of the present disclosure may also be implemented in the form of a recording medium including an instruction which may be executed by a computer, such as a program module executed by the computer. A computer-readable medium may be any available medium that may be accessed by the computer, and include both volatile and non-volatile media, and removable and non-removable media. In addition, the computer-readable medium may include a computer storage medium and a communication medium. The computer storage medium may include both the volatile and non-volatile media and both the removable and non-removable media, implemented using any method or technology for storing information such as a computer-readable instruction, a data structure, a program module or another data. The communication medium may typically include other data in a modulated data signal, such as computer-readable instructions, data structures, or program modules.

In addition, the computer-readable storage medium may be provided in the form of a non-transitory storage medium. Here, the "non-transitory storage medium" may refer to a tangible device and only indicate that this storage medium does not include a signal (e.g., electromagnetic wave), and this term does not distinguish a case where data is stored semi-permanently in the storage medium and a case where data is temporarily stored in the storage medium from each other. For example, the "non-transitory storage medium" may include a buffer in which data is temporarily stored.

According to an embodiment, the methods according to the various embodiments disclosed in the present disclosure may be included and provided in a computer program product. The computer program product may be traded as a commodity between a seller and a purchaser. The computer program product may be distributed in a form of the machine-readable storage medium (e.g., a compact disc read only memory (CD-ROM)), or may be distributed online (e.g., by download or upload) via an application store or directly between two user devices (e.g., smartphones). In case of the online distribution, at least a part of the computer program product (e.g., downloadable app) may be at least temporarily stored or temporarily provided in the machine-readable storage medium such as the memory of a manufacturer server, an application store server, or a relay server.

The above-described embodiments are illustratively provided, and it is apparent to those skilled in the art to which the present disclosure pertains that the present disclosure may be embodied in another specific form without any change in its technical idea or essential characteristics. Therefore, it should be understood that the embodiments described hereinabove are illustrative rather than restrictive in all aspects. For example, the components each described as a single type may also be implemented in a distributed manner, and similarly, the components described as being distributed from each other may also be implemented in a coupled manner.

It should be understood that the scope of the present disclosure is defined by the claims disclosed below rather than the detailed description provided above, and includes all alternations and modifications derived from the claims and their equivalents.

## Claims

1. An electronic apparatus (100) comprising:
a memory (110) storing instructions; and
at least one processor (120) including processing circuitry,
wherein, if executed individually or collectively by the at least one processor (120), the instructions cause the electronic apparatus (100) to:
obtain a persona (605) corresponding to a query (201, 1110, 1120) among a plurality of personas (605) corresponding to content based on a database if user input corresponding to the query (201, 1110, 1120) related to the content is received; and
provide a response (202, 617, 1040) corresponding to the query (201, 1110, 1120) based on the obtained persona (605),
the plurality of personas (605) being based on a knowledge graph (510, 601) corresponding to the content and the database.

2. The electronic apparatus (100) as claimed in claim 1, wherein, if executed individually or collectively by the at least one processor (120), the instructions cause the electronic apparatus (100) to obtain, by using an artificial intelligence model, the plurality of personas (605) corresponding to the content based on the knowledge graph (510, 601) corresponding to the content, the database, and a first prompt (603),
the first prompt (603) including a prompt corresponding to a request for predicting an attribute of a user corresponding to the content for a plurality of queries in the database based on the knowledge graph (510, 601) corresponding to the content.

3. The electronic apparatus (100) as claimed in claim 2, wherein, if executed individually or collectively by the at least one processor (120), the instructions cause the electronic apparatus (100) to:
obtain evaluation information corresponding to an expected query (607) corresponding to the persona (605), an expected response (609) to the expected query (607), and feedback (611) on the expected response (609) for each of the plurality of personas (605); and
update, by using an updated artificial intelligence model, the plurality of personas (605) based on the evaluation information.

4. The electronic apparatus (100) as claimed in claim 3, wherein, if executed individually or collectively by the at least one processor (120), the instructions cause the electronic apparatus (100) to:
obtain, by using the artificial intelligence model, the expected query (607) based on the persona (605), the knowledge graph (510, 601) corresponding to the content, and a second prompt (606);
obtain, by using the artificial intelligence model, the expected response (609) based on the persona (605), the knowledge graph (510, 601) corresponding to the content, the expected query (607), and a third prompt (608); and
obtain, by using a second artificial intelligence model (604), the feedback (611) based on the persona (605), the knowledge graph (510, 601) corresponding to the content, the expected query (607), the expected response (609), and a fourth prompt (610),
the second prompt (606) including a prompt corresponding to a request for the expected query (607) by the user corresponding to the persona (605) based on the knowledge graph (510, 601) corresponding to the content,
the third prompt (608) including a prompt corresponding to a request for the expected response (609) to the expected query (607) by the user corresponding to the persona (605) based on the knowledge graph (510, 601) corresponding to the content, and
the fourth prompt (610) including a prompt corresponding to a request for the feedback (611) on the expected response (609) by the user corresponding to the persona (605) based on the knowledge graph (510, 601) corresponding to the content.

5. The electronic apparatus (100) as claimed in claim 3 or claim 4, wherein, if executed individually or collectively by the at least one processor (120), the instructions cause the electronic apparatus (100) to:
obtain, by using an evaluation model, a first score (614) based on a prompt corresponding to a request for a score related to quality of the expected query (607) and the expected response (609); and
update the artificial intelligence model based on the first score (614).

6. The electronic apparatus (100) as claimed in any one of the claims 3 to 5, wherein, if executed individually or collectively by the at least one processor (120), the instructions cause the electronic apparatus (100) to:
obtain, by using an evaluation model, a second score (615) based on a set including the expected query (607), the expected response (609), and the feedback (611), and a prompt corresponding to a request for a score related to quality of the set; and
update the artificial intelligence model based on the second score (615).

7. The electronic apparatus (100) as claimed in any one of the preceding claims, wherein the knowledge graph (510, 601) corresponding to the content includes at least one node, at least one edge, or a text (914) description of a frame for each of the plurality of frames included in the content,
the node corresponds to an object included in the frame, and
the edge corresponds to a relationship between the objects included in the frame.

8. The electronic apparatus (100) as claimed in claim 7, wherein, if executed individually or collectively by the at least one processor (120), the instructions cause the electronic apparatus (100) to:
obtain a usage rate of at least one of the node or the edge corresponding to obtaining the response (202, 617, 1040) to the query (201, 1110, 1120); and
update the knowledge graph (510, 601) based on the obtained usage rate.

9. The electronic apparatus (100) as claimed in any one of the preceding claims, wherein, if executed individually or collectively by the at least one processor (120), the instructions cause the electronic apparatus (100) to:
obtain an average value of similarities for each of the plurality of personas (605) based on a similarity between the query (201, 1110, 1120) and a plurality of queries corresponding to the plurality of personas (605) stored in the database; and
identify, as the persona (605) corresponding to the query (201, 1110, 1120), a persona (605) having a greatest value among the obtained average values.

10. The electronic apparatus (100) as claimed in any one of the preceding claims, wherein, if executed individually or collectively by the at least one processor (120), the instructions cause the electronic apparatus (100) to:
identify a similarity between the query (201, 1110, 1120) and a plurality of queries in the database;
obtain, from the database, the response (202, 617, 1040) corresponding to the query (201, 1110, 1120) equal to or greater than a threshold value and provide the response (202, 617, 1040) if the query (201, 1110, 1120) whose similarity is equal to or greater than the threshold value exists among the plurality of queries; and
obtain the response (202, 617, 1040) corresponding to the query (201, 1110, 1120) based on the obtained persona (605) if no query (201, 1110, 1120) whose similarity is equal to or greater than the threshold value exists among the plurality of queries.

11. A control method of an electronic apparatus (100), the method comprising:
obtaining a persona (605) corresponding to a query (201, 1110, 1120) among a plurality of personas (605) corresponding to content based on a database if user input corresponding to the query (201, 1110, 1120) related to the content is received; and
providing a response (202, 617, 1040) corresponding to the query (201, 1110, 1120) based on the obtained persona (605),
the plurality of personas (605) being based on a knowledge graph (510, 601) corresponding to the content and the database.

12. The method as claimed in claim 11, further comprising obtaining, by using an artificial intelligence model, the plurality of personas (605) corresponding to the content based on the knowledge graph (510, 601) corresponding to the content, the database, and a first prompt (603),
the first prompt (603) including a prompt corresponding to a request for predicting an attribute of a user corresponding to the content for a plurality of queries in the database based on the knowledge graph (510, 601) corresponding to the content.

13. The method as claimed in claim 12, further comprising:
obtaining evaluation information corresponding to an expected query (607) corresponding to the persona (605), an expected response (609) to the expected query (607), and feedback (611) on the expected response (609) for each of the plurality of personas (605); and
updating, by using an updated artificial intelligence model, the plurality of personas (605) based on the evaluation information.

14. The method as claimed in claim 13, wherein the updating of the plurality of personas (605) includes
obtaining, by using the artificial intelligence model, the expected query (607) based on the persona (605), the knowledge graph (510, 601) corresponding to the content, and a second prompt (606);
obtaining, by using the artificial intelligence model, the expected response (609) based on the persona (605), the knowledge graph (510, 601) corresponding to the content, the expected query (607), and a third prompt (608); and
obtaining, by using a second artificial intelligence model (604), the feedback (611) based on the persona (605), the knowledge graph (510, 601) corresponding to the content, the expected query (607), the expected response (609), and a fourth prompt (610),
the second prompt (606) including a prompt corresponding to a request for the expected query (607) by the user corresponding to the persona (605) based on the knowledge graph (510, 601) corresponding to the content,
the third prompt (608) including a prompt corresponding to a request for the expected response (609) to the expected query (607) by the user corresponding to the persona (605) based on the knowledge graph (510, 601) corresponding to the content, and
the fourth prompt (610) including a prompt corresponding to a request for the feedback (611) on the expected response (609) by the user corresponding to the persona (605) based on the knowledge graph (510, 601) corresponding to the content.

15. The method as claimed in claim 13 or claim 14, wherein the updating of the artificial intelligence model includes
obtaining, by using an evaluation model, a first score (614) based on a prompt corresponding to a request for a score related to quality of the expected query (607) and the expected response (609); and
updating the artificial intelligence model based on the first score (614).
